# NEUE EUROPÄISCHE PATENTSCHRIFT

(11) **EP 0 293 618 B2**
(45) Veröffentlichungstag und Bekanntmachung des Hinweises auf die Entscheidung über den Einspruch: **17.11.1999**
(45) Hinweis auf die Patenterteilung: 05.08.1992
(21) Anmeldenummer: 88107127.8
(22) Anmeldetag: 04.05.1988
(51) Int. Cl.: G05B 19/10

(54) **Einrichtung zur Steuerung einer Maschine**
Device for the control of a machine
Dispositif de commande d'une machine

(30) Priorität: 03.06.1987 DE 3718594
(43) Veröffentlichungstag der Anmeldung: 07.12.1988
(73) Patentinhaber: Heidelberger Druckmaschinen Aktiengesellschaft, D-69019 Heidelberg (DE)
(72) Erfinder: Rodi, Anton, D-6906 Leimen 3 (DE); Hauck, Dieter, D-6930 Eberbach (DE); Lehnert, Michael, D-6900 Heidelberg (DE); Jurkewitz, Manfred, D-6908 Wiesloch (DE)
(74) Vertreter: Fey, Hans-Jürgen

(56) Entgegenhaltungen:
- DE-A- 3 111 177
- FR-A- 2 098 065
- FR-A- 2 423 831
- FR-A- 2 450 305
- FR-A- 2 518 277
- GB-A- 2 008 286
- R.LAUBER : PROZESSAUTOMATISIERUNG I, SPRINGER VERLAG, BERLIN HEIDELBERG NEW YORK 1976, Seiten 13-14
- INFO NR. 7, MAN ROLAND, Firmenprospekt

## Beschreibung

Die Erfindung betrifft eine Steuereinrichtung einer Druckmaschine mit einem Steuerpult, bestehend aus Bedienelementen zur Eingabe von Befehlen und einer Anzeigeeinrichtung zur Zustandsanzeige.

Aus der FR-A 2 450 305 ist eine Programmsteuerung für eine Waschmaschine bekannt geworden. Um die Voreinstellung der Waschmaschine durchzuführen, sind eine Vielzahl von Wahltasten vorgesehen, die einer entsprechenden Anzahl von Funktionen der Waschmaschine zugeordnet sind. Beispielsweise dient einer dieser Wahlschalter dazu, ein bestimmtes Waschprogramm auszuwählen, ein anderer dient zur Auswahl der gewünschten Schleuderdrehzahl. Dies bedeutet, daß bei einer Vielzahl durchzuführender Funktionen eine entsprechende Anzahl von Wahltasten vorgesehen sein muß, was natürlich einen erheblichen Aufwand darstellt. Weiterhin dient die in der FR-A 2 450 305 vorgestellte Programmsteuerung lediglich der Voreinstellung einer Waschmaschine - nachträgliche Änderungen einzelner Funktionen sind nicht möglich.

In der GB-A 2 098 286 ist eine Vorrichtung zur Regelung einer Waschmaschine beschrieben. Hierzu sind zwei Gruppen von Steuerelementen vorgesehen, wobei mittels einer zweiten Gruppe von Steuerelementen vom Bediener Vorgaben bezüglich der zu behandelnden Wäsche gemacht werden. Rechnergesteuert erfolgt daraufhin eine optimale Einstellung der Elemente einer ersten Gruppe von Steuerelementen. Diese optimale vom Rechner bestimmte Einstellung wird über Anzeigeelemente visualisiert. Dem Bediener ist hier die Möglichkeit gegeben, die angezeigten Stellungen auf Wunsch abzuändern. Hierzu sind eine entsprechende Anzahl weiterer Steuerelemente vorgesehen.

Auch die FR-A 2 098 065 beschäftigt sich mit der Voreinstellung einer Waschmaschine. Jeder einzelnen Funktion der Waschmaschine ist jeweils eine entsprechende Wahltaste zugeordnet. Die voreingestellten Daten sind im nachhinein nicht mehr korrigierbar.

In dem Buch "Prozeßautomatisierung I", R. Lauber, Springer Verlag Berlin 1976, Seite 13 bis 14, wird die Verknüpfung von Teilprozessen bei der Prozeßautomatisierung beschrieben. Ein zentraler Prozeßrechner überwacht, steuert und regelt die mehrere Einzelanlagen teilweise oder ganz programmgesteuert. Die einzelnen Teilprozesse sind über den Prozeßrechner miteinander verknüpft.

Eine Einrichtung zur Farbsteuerung einer Druckmaschine ist aus der Firmeninformation der Firma HEIDELBERGER DRUCKMASCHINEN AG, "Heidelberger Nachrichten 3/40" bekannt geworden. Das dort unter dem Namen CPC 1 vorgestellte System beinhaltet ein Steuerpult für die Farbführung in einer Druckmaschine, bei welchem über Bedienelemente Farbdosierelemente verstellt werden können. Die Positionen dieser Farbdosierelemente werden auf eine LED-Display angezeigt. Bei einer Druckmaschine, aber auch bei anderen Arten von Maschinen, beispielsweise Werkzeugmaschinen, gibt es jedoch eine Vielzahl von unterschiedlichen Maschinenkomponenten, die vor Inbetriebnahme der Maschine oder auch während des Maschinenlaufs eingestellt oder verstellt werden müssen. Beispielsweise sind eine Anzahl von Stellgliedern vorhanden, die ein bestimmtes Organ einer Komponente betätigen. Bisher war es üblich, zur Einstellung bzw. Verstellung und zur Anzeige der Einstellung bzw. Verstellung, ein Schaltpult vorzusehen, bei dem eine Vielzahl von Tasten vorgesehen waren und jede Taste einen bestimmten Stellbefehl ausführen konnte. Es ist ersichtlich, daß gerade bei sehr komplexen Maschinen mit einer Vielzahl von Druckwerken und Aggregaten solche Schaltpulte sehr groß und unübersichtlich werden und damit eine Bedienung erschweren.

In einer mit INFO 7 bezeichneten Druckschrift der Firma MAN Roland Druckmaschinen AG ist ein Leitstand mit einer Tastatur und mehreren alphanumerischen und grafischen Anzeigeelementen beschrieben. Die Tastatur und Anzeigeelemente sind getrennt voneinander angeordnet. Es gibt keine räumliche/geometrische Zuordnung der Tastaturelemente zu den Anzeigeelementen. Die Tastatur enthält neben Eingabetasten für Ziffern und Buchstaben und Cusortasten weitere Tastengruppen mit speziellen Funktionen. Die Funktionen, die mit den Tastengruppen ausgeführt werden können, sind nicht streng hierarchisch geordnet. Diese Aufgabe wird durch eine Steuerungseinrichtung gelöst, die die Merkmale des Anspruches 1 aufweist.

Der wesentliche Vorteil dieser Struktur einer Eingabe-und Anzeigeeinrichtung ist die geringe Anzahl von Tasten bzw. Eingabeelementen, deren Belegung mehrfach ist und je nach Auswahl durch die erste Gruppe von Bedienelementen aufgrund eine Anzeige vorgenommen wird. Außerdem kann durch die Anzeige unmittelbar dargestellt werden, ob eine bestimmte Funktion der Maschine an- oder ausgeschaltet ist, bzw. einen bestimmten Wert aufweist. So besteht z.B. mit dem Display auch die Möglichkeil, einen Betrag eines Einstellweges, beispielsweise graphisch und/oder numerisch darzustellen.

Vorteilhafterweise ist eine Anzeigeeinrichtung vorgesehen, mit welcher die Belegung der Bedienelemente in graphischer Darstellung angezeigt wird. Damit wird die Anzeige sprachunabhängig. Die Symbole sind einfach zu erkennen und schließen eine Fehlbedienung durch textliche Mißverständnisse aus. Es ist ferner möglich, ein zusätzliches Bild anzuzeigen, welches die gesamte Komponente der Maschine oder auch die gesamte Maschine zeigt und es der Bedienperson erleichtert, die auszuführenden Befehle der jeweiligen Komponente, bzw. der Maschine zuzuordnen. Die Anzeige dieser Komponenten bzw. der Maschine wird durch die Anwahl der Bedienelemente gesteuert, dies bedeutete beispielsweise, daß bei Betätigen einer Taste der ersten Gruppe von Bedienelementen diese angewählte Hauptkomponente dargestellt wird, während nach Betätigen einer Taste der zweiten Gruppe von Bedienelementen die nunmehr angewählte Komponente als Gesamtbild dargestellt ist.

Eine Weiterbildung der Erfindung sieht vor, eine Funktionseingabe, die durch Befehl veranlaßt wurde, sofort auszuführen oder nur vorzuwählen und erst dann auszuführen, wenn beispielsweise ein weiterer Befehl gegeben wird oder die Maschine sich in einem bestimmten Betriebszustand befindet. Diese sogenannte Vorwahl von Funktionen ist z.B. dann nützlich, wenn die Maschine vor dem Start eingestellt wird und erst mit Beginn des Maschinenlaufs die Voreinstellung durchgeführt werden soll.

Ein weiterer Vorteil wird weiterbildungsgemäß darin gesehen, daß auch bei Ausfall des Displays eine Bedienung der Maschine möglich ist, da die Tastenbelegungsmöglichkeiten fest vorgegeben sind und eine Belegung der Tasten durch das Betätigen bestimmter Tasten definiert ist, kann diese Belegung entweder aus der Kenntnis des Belegungsschemas oder aus zusätzlichen Hilfsmittel, wie z.B. Schablonen oder ähnliches, festgestellt und somit eine Bedienung der Maschine ermöglicht werden.

Bestimmte Prozesse können in einer Maschine automatisch ohne Steuerung von außen ablaufen. Hierzu ist in einer Weiterbildung der Erfindung vorgesehen, zusätzliche Bedienelemente an der Bedieneinrichtung anzuordnen, mit der diese Prozesse ausgelöst werden können.

Eine weitere Ausgestaltung der Erfindung sieht die Darstellung mehrerer Komponenten vor, so daß ein Bediener die Möglichkeit hat, die eingestellten Funktionen mehrerer Komponenten gleichzeitig zu überwachen. Es ist ferner vorgesehen, diese Funktionen nicht nur zu überwachen, sondern auch Schalt- oder Einstellbefehle gleichzeitig auf mehrere Komponenten wirken zu lassen. Wird die Einrichtung bei einer Druckmaschine angewendet, so ist es von besonderem Vorteil, die zweite Gruppe von Bedienelementen oder auch eine der zweiten Gruppe parallel geschalteten Gruppe von Bedienelementen den einzelnen Druckwerken der Druckmaschine zuzuordnen. Damit kann jedes Druckwerk als Komponente einzeln oder auch in der Summe ausgewählt werden.

Die Anzeige der Zuordnung der Tastenbelegung zu bestimmten Komponenten der Maschine erfolgt in einer Ausgestaltung der Erfindung derart, daß die Darstellung der Gruppen der Bedienelemente an einem Display bzw. an Außenkanten eines Displays angeordnet sind und der des jeweiligen Bedienelements bzw. Taste benachbarte Bereich des Displays die jeweilige Funktion oder Wirkungsweise bzw. Zuordnung des Bedienelements anzeigt.

In einer Weiterbildung der Erfindung ist vorgesehen, das Display gleichzeitig zur Serviceüberwachung, d.h. zur Darstellung des ordnungsgemäßen Betriebs der Komponenten oder weiterer Funktionen vorzusehen, um den Maschinenservice zu erleichtern.

Wird eine Druckmaschine mit der Einrichtung versehen, so ist es von Vorteil, diese Einrichtung zentral in unmittelbarer Nähe der Druckmaschine anzuordnen. Zusätzlich zu dieser zentral angeordneten Einrichtung kann in vorteilhafter Weise an jedem Druckwerk bzw. an der Papierauslage oder der Papieranlage ein Bedienpult oder eine Anzeigeeinrichtung angeordnet sein, mit welchem eine Bedienung oder Überwachung insoweit vorgenommen werden kann, als die Bedienperson diese an der dort befindlichen Komponente benötigt. Beispielsweise ist es zweckmäßig, an der Papierzufuhr einer Bogendruckmaschine, d.h. an der Bogenanlage ein Display anzuordnen, durch welches Fehlbogen oder sonstige Störungen und die Druckgeschwindigkeit angezeigt werden können. Außerdem besteht an diesen Bedienstellen die Möglichkeit, die Druckgeschwindigkeit zu ändern, und beispielsweise eine kurzzeitige Über- oder Unterfeuchtung beim Offsetdruckverfahren und andere Steuereingriffe vorzunehmen.

Es ist bekanntermaßen üblich, an einer Druckmaschine ein Farb- und/oder Registersteuerpult, als von der Druckmaschine getrennt aufgestellte Einheit, vorzusehen. Dieser Einheit kann die erfindungsgemäße Steuereinrichtung angegliedert werden, wobei mit dieser Steuereinrichtung sämtliche Steuereingriffe an der Druckmaschine vorgenommen werden, die nicht die Farb- bzw. Registerregelung betreffen.

Andererseits besteht auch die Möglichkeit, Steuereingriffe an beiden Einrichtungen vorzunehmen. Dabei ist gemäß einer Weiterbildung der Erfindung vorgesehen, Steuereingriffe, die an einer der Einrichtungen vorgenommen werden, auf die andere Einrichtung wirken zu lassen. Damit lassen sich Überschneidungen in der Bedienung bzw. Doppelbedienungen vermeiden.

Es ist zweckmäßig, diese Steuereingriffe an die zentrale Einrichtung weiterzuleiten, so daß diese Steuereingriffe dort erkennbar sind.

Weitere vorteilhafte Ausgestaltungen der Erfindung sind in der nachfolgenden Figurenbeschreibung enthalten.

Die Erfindung wird nachstehend anhand von Ausführungsbeispielen näher erläutert.

Es zeigen:
- Fig.1: Den schematischen Aufbau einer Steuereinrichtung für eine Druck-Maschine,
- Fig.2: den Aufbau einer Steuereinrichtung für eine Bogendruckmaschine,
- Fig.3: eine Auflistung der Bedienungsmöglichkeiten der in Fig. 2 gezeigten Steuereinrichtung,
- Fig.3a: ein Ablaufdiagramm zur Bedienung der in Fig. 2 gezeigten Steuereinrichtung,
- Fig.4: ein Beispiel zur Steuerung für den Ausleger einer Bogendruckmaschine,
- Fig.5: ein Beispiel zur Anzeige des Papierlaufs bei einer Bogendruckmaschine,
- Fig.6: ein Beispiel zur Anzeige aller Druckwerke einer Bogendruckmaschine.

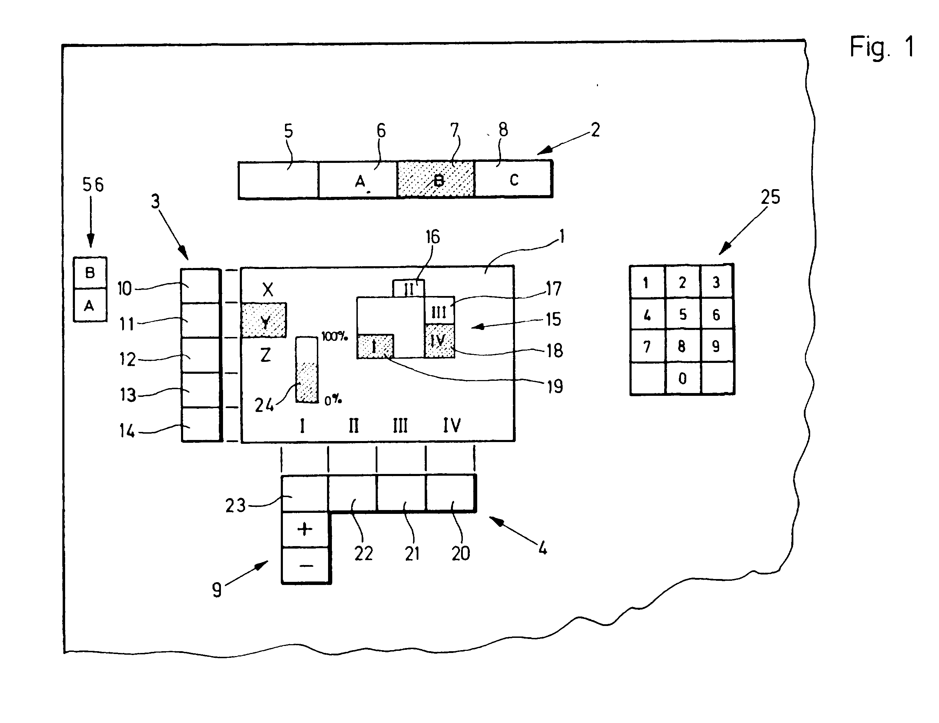

In Fig. 1 ist eine Bedien- und Anzeigeeinrichtung, welche auf einem Steuerpult einer Druck-Maschine angeordnet ist, dargestellt. Als Anzeige ist ein Display 1 vorgesehen, die Bedienelemente sind in Gruppen angeordnet, eine erste Gruppe Bedienelemente 2 ist oberhalb des Displays angeordnet, eine zweite Gruppe Bedienelemente 3 ist seitlich des Displays angeordnet und eine dritte Gruppe Bedienelemente 4 ist unterhalb des Displays angeordnet.

Mit der Gruppe der Bedienelemente 2 können verschiedene Hauptgruppen A,B,C entsprechend Ziffern 6,7,8 oder die Maschine gesamt 5 angewählt werden. Mit den Bedienelementen 3 können verschiedene Komponenten der jeweils angewählten Hauptgruppe oder der Maschine gesamt ausgewählt werden, während mit den Bedienelementen 4 die Steuerung, beispielsweise das An- und Abschalten der ausgewählten Komponente vorgenommen wird oder verschiedene Funktionen der ausgewählten Komponente gesteuert werden. Ein rechts des Displays 1 angeordnetes Eingabefeld 25 dient zur numerischen Eingabe von Einstelldaten, Stückzahldaten oder ähnlichem. Mit Anzeigemodustasten 56 wird ausgewählt, in welchem Anzeigemodus Eingaben vorgenommen werden sollen. In einem ersten Eingabemodus (56, Taste A) werden die Eingaben direkt an die Maschine übernommen, während in einem zweiten Eingabemodus (56, Taste B) die Eingaben vorerst abgespeichert werden und zu einem späteren Zeitpunkt von der Maschine übernommen werden. Außerdem besteht noch durch eine Taste 9 die Möglichkeit an einer bestimmten Komponente eine Einstellung auf einen bestimmten Einstellwert vorzunehmen. Eine Steuerung einer bestimmten bzw. beliebigen Komponente soll an einem Beispiel die Funktionsweise der Steuereinrichtung verdeutlichen.

Zunächst wird an den Bedienelementen 2 die Hauptgruppe ausgewählt, in welcher eine Änderung vorgenommen werden soll. Dies erfolgt durch das Betätigen, beispielsweise des Bedienelements 7. Die Bedienelemente können als Taster ausgebildet sein, selbstverständlich besteht auch die Möglichkeit, die Bedienelemente als berührungslose Sensoren oder ähnliches aufzubauen. Nach Betätigen des Bedienelements 7 werden die Bedienelemente 3 über das Display 1 mit bestimmten Komponenten der ausgewählten Hauptgruppe belegt, d.h. über die Taste 10 kann die Komponente X, über Taste 11 die Komponente Y, über Taste 12 Komponente Z der ausgewählten Hauptgruppe angewählt werden. In diesem Beispiel sind die Tasten 13 und 14 nicht mit Komponenten belegt.

Durch eine Auswahl der Komponente Y, aufgrund des Betätigens der Taste 11 erscheint diese Komponente als Schemadarstellung 15 auf dem Display 1. Gleichzeitig werden in dieser Schemadarstellung Motoren, Stellglieder oder ähnliches (I,II,III,IV) als sogenannte Funktionsglieder graphisch dargestellt. Gleichzeitig werden die Bedienelemente 4 mit diesen Funktionsgliedern (I,II,III,IV) belegt, und zwar durch Aufleuchten der entsprechenden Symbole an den dem Bedienelementen 4 zugeordneten Stellen im Display 1. Nunmehr besteht die Möglichkeit, mit den Bedienelementen 4, beispielsweise mit der Taste 20, das Funktionsglied 18 (IV) einzuschalten. Der eingeschaltete Betriebszustand wird durch Aufleuchten des Funktionsgliedes 18 (IV) angezeigt. Ebenso wird angezeigt, welche Funktionsglieder schon eingeschaltet waren, dies erfolgt ebenfalls durch Aufleuchten des dargestellten Funktionsgliedes, beispielsweise, des Funktionsgliedes 19 (I).

Es besteht ferner über die Taste 9, die als Plus- Minus Taste aufgebaut ist, die Möglichkeit, ein Funktionsglied wertemäßig zu verstellen. In dem gezeigten Beispiel kann das Funktionsglied I (19), welches oberhalb der Taste 9 bzw. der Funktionstaste 23 angezeigt wird, eingestellt oder verstellt werden. Die Größe des Einstellwertes wird über eine graphische Darstellung mit einem Wertezeiger 24 optisch erkenntlich gemacht. beispielsweise zeigt dieser Wertezeiger eine Drehzahl des Funktionsgliedes 1, welches ein Motor beinhaltet an, wobei der Betrag der angezeigten Drehzahl in Relation zur Maximaldrehzahl oder zu einer Nenndrehzahl dargestellt ist. Selbstverständlich besteht die Möglichkeit, jeder Funktionstaste 20-23 eine Taste 9 zuzuordnen. Dies ist dann erforderlich, wenn bei mehreren oder allen Funktionsglieder eine Einstellung auf bestimmte Werte benötigt wird. Ist jedoch nur das Ein- oder Ausschalten eines Funktionsglieds erforderlich, dann reicht eine einzelne Funktionstaste völlig aus.

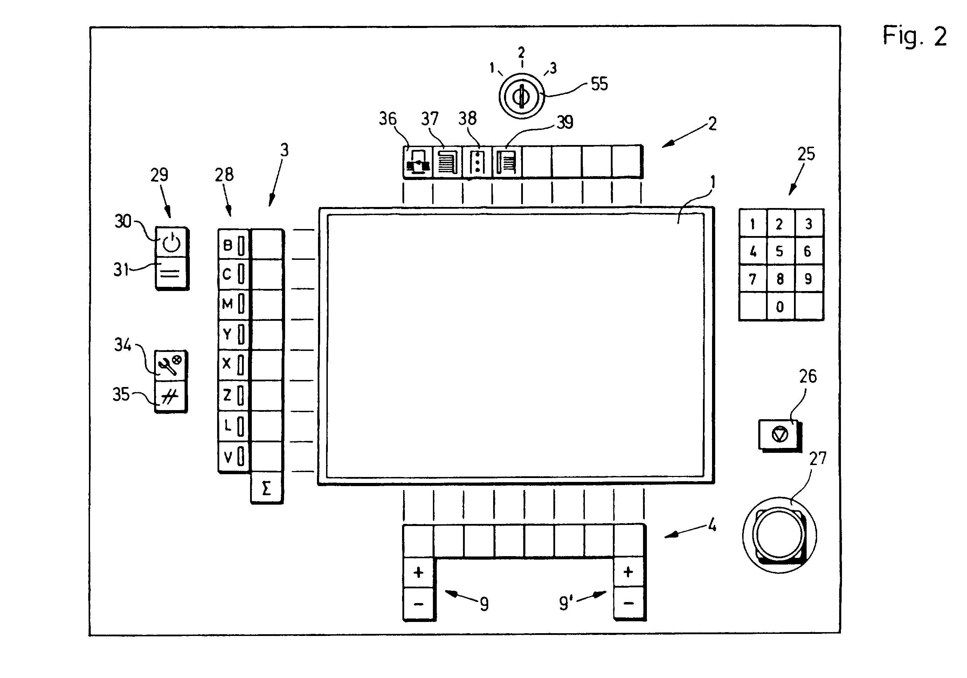

In Fig. 2 ist das Bedien- und Anzeigepult zur Steuerung einer Bogendruckmaschine dargestellt und wird nachfolgend näher beschrieben. Auch hier sind die Gruppen von Bedienelementen 2,3 und 4 sowie das Display 1 und Tasten 9,9' vorhanden. Ferner zeigt diese Einrichtung noch ein Eingabefeld zur numerischen Eingabe 25, eine Taste für Maschinenhalt, eine Taste Not-Aus, zwei weitere Gruppen von Tasten 28,29 und ein Schlüsselschalter 55. Die Tastengruppe 28 dient zur Auswahl der einzelnen Druckwerke der Druckmaschine und ist jeweils mit den Druckfarben bzw. mit anderen Kennzeichen der einzelnen Druckwerken bezeichnet.

Die Tastengruppe 29 beinhaltet eine Taste Vorwahl 30, eine Taste Istwert 31, eine Taste Service 34 und eine Taste Störung 35. Mit der Vorwahltaste 29 besteht die Möglichkeit, bestimmte Funktionseingaben nur vorzuwählen, wobei diese vorgewählten Funktionen erst beim Start oder in einem bestimmten Betriebszustand der Maschine eingeschaltet werden. Wird dagegen die Istwerttaste 29 betätigt, dann erfolgt sofort bei Eingabe der entsprechenden Funktion die Übergabe, d.h. der eingegebene Befehl wird sofort ausgeführt. Durch Betätigen der Servicetaste 34 können die Schaltzustände der einzelnen Komponenten überprüft werden.

Über die Bedienelemente 2 können Hauptgruppen der Druckmaschine ausgewählt werden: Taste 36 bezeichnet die Maschine gesamt. Nach Betätigen dieser Taste können Komponenten der Gesamtmaschine, wie Papierlauf, Saugluft, Blasluft, Kühleinrichtung bzw. Kühlung in ihrer Funktion, gesteuert werden. Mit der Taste 37 wird die Bogenauslage als Hauptgruppen angewählt, mit der Taste 38 die Druckwerke als Maschinenelement und mit der Taste 39 der Anleger als Maschinenelement ausgewählt werden.

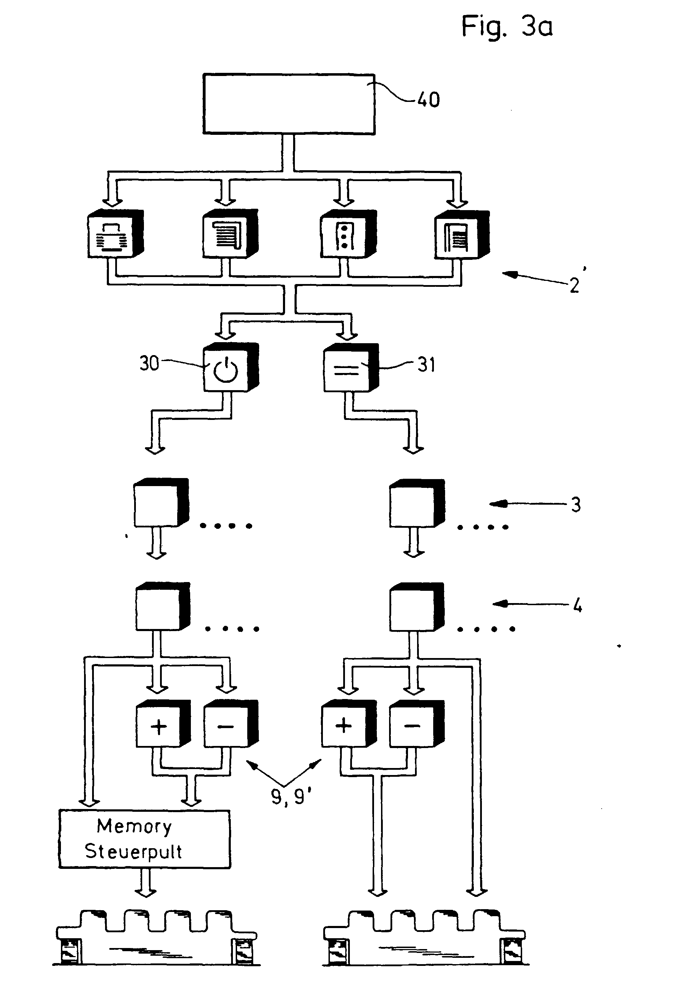

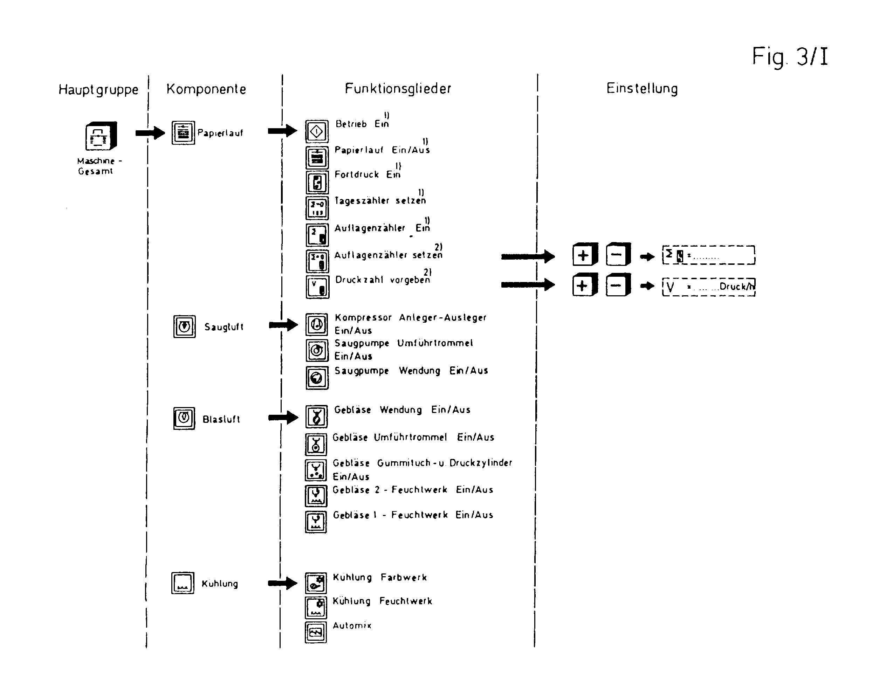

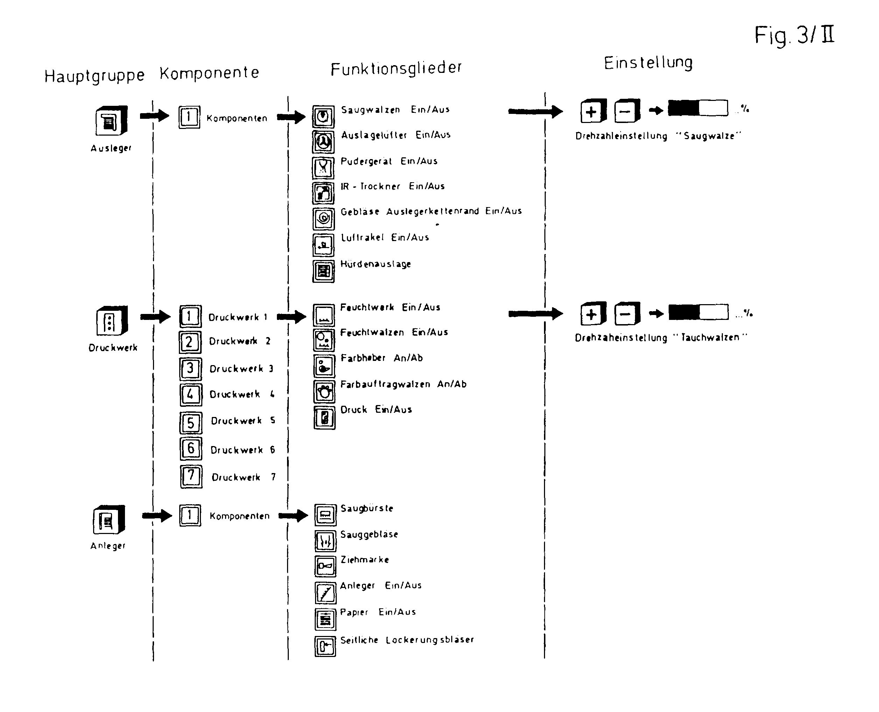

Zur Erläuterung der Bedienung bzw. Abfolge der Bedienungsschritte zur Steuerung der Bogendruckmaschine ist in Fig. 3 eine Auflistung der Bedienungsmöglichkeiten dargestellt. In einer ersten Spalte sind die Hauptgruppen bzw. Maschinenelementen, wie sie auf den Bedienelementen 2 der Fig. 2 bezeichnet sind, aufgelistet. Bei Betätigen eines der Bedienelemente 2 werden die Bedienelemente 3 mit den Komponenten, welche in Spalte 2 gezeigt sind, belegt. Die Auswahl einer dieser Komponente, durch Betätigen eines der Bedienelemente 3, bewirkt eine Belegung der Funktionstasten (Bedienelemente 4), durch die in Spalte 3 der Fig. 3 gezeigten Funktionsglieder. Bei den Funktionsgliedern "Auflagezähler setzen", "Druckzahl vorgeben" sowie "Saugwalze" und "Feuchtung" besteht außerdem die Möglichkeit über die Tasten 9,9' eine Einstellung auf einen bestimmten Wert vorzunehmen. So kann durch Betätigen der Taste 9' in der Funktion "Auflagenzähler setzen" eine bestimmte Auflagenzahl vorgegeben werden, die dann durch die Maschine abgearbeitet wird. Ebenso ist durch die Taste 9 eine bestimmte Druckgeschwindigkeit vorgebbar. Bei dem Funktionsglied Saugwalze wird über die Taste 9 eine Drehzahleinstellung der Saugwalze vorgenommen. Bei dem Funktionsglied Feuchtung wird über die Taste 9 eine Drehzahleinstellung der Tauchwalze des Feuchtwerks vorgenommen.

Das in Fig. 3a gezeigte Ablaufdiagramm soll das Bedienungsschema an der Steuereinrichtung bzw. dem Steuerpult verdeutlichen. Nach Inbetriebnahme des Steuerpults, d.h. nach dem Start 40 wird über die Bedienelemente 2 eines der Hauptgruppen oder die Maschine gesamt ausgewählt. Nach dieser Auswahl erfolgt durch Betätigen der Taste 30 oder 31 die Anweisung, die nachfolgende Funktionseingabe sofort an die Maschine weiterzuleiten (Istwerttaste 31) oder die nachfolgende Funktionswerteingabe erst abzuspeichern und dann zu einem bestimmten Zeitpunkt, beispielsweise bei Start der Maschine, diese Funktionseinstellung auszuführen. Diese vorläufige Abspeicherung erfordert ein Betätigen der Vorwahltaste 30. Nach Vornahme dieser Handlung wird eine den Bedienelementen 3 zugeordnete Komponente, die in Spalte 2 der Fig. 3 aufgelistet ist, ausgewählt und/oder eine Verstellung über die Tasten 9,9' vorgenommen. Wurde die Istwerttaste 31 betätigt, dann werden die ausgeführten Funktionen sofort von der Druckmaschine übernommen; falls die Vorwahltaste 30 betätigt wurde, werden die ausgeführten Funktionen in einen Speicher im Steuerpult zwischengespeichert und erst nach Erfüllen bestimmter Kriterien an die Druckmaschine übergeben.

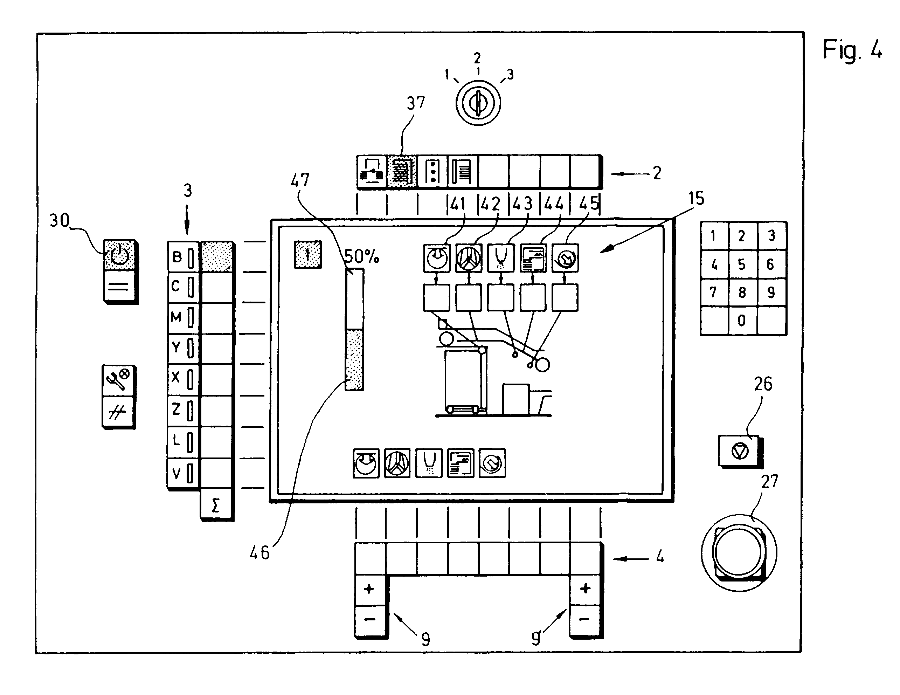

In Fig. 4 ist ein Beispiel zur Steuerung für den Ausleger einer Bogendruckmaschine gezeigt. Zur Bedienung von Funktionen am Ausleger, ist es zuerst erforderlich, bei den Bedienelementen 2 die Taste 37 zu betätigen. Daraufhin wird die oberste Taste der Bedienelemente 3 mit der Ziffer 1 belegt, dies bedeutet, daß der Ausleger lediglich eine einzige Gruppe von Komponenten beinhaltet. Diese Gruppe von Komponenten wird in einer Schemadarstellung 15 angezeigt. Diese Schemadarstellung beinhaltet eine Darstellung des Auslegers und darüber angeordnet die Funktionsglieder Saugwalze 41, Auslagelüfter 42, Pudergerät 43. IR-Trockner 44, Gebläse Auslagekettenrad 45. Durch Betätigen der Vorwahltaste 30 wird festgelegt, daß eine nachfolgende Betätigung einer der Funktionstasten der Bedienelemente 4, vorerst abgespeichert wird. Mittels der Bedienelemente 4 kann nun eines der Funktionsglieder ein- bzw. ausgeschaltet werden. Ein Einschalten der Funktionsglieder wird durch Aufleuchten des entsprechenden Funktionsglieds in der Schemadarstellung 15 signalisiert. Außerdem besteht über die Taste 9 die Möglichkeit, eine Drehzahleinstellung der Saugwalze 41 vorzunehmen. Die voreingestellte Drehzahl wird über die graphische Anzeige 46 und über eine zusätzliche numerische Anzeige 47 angezeigt.

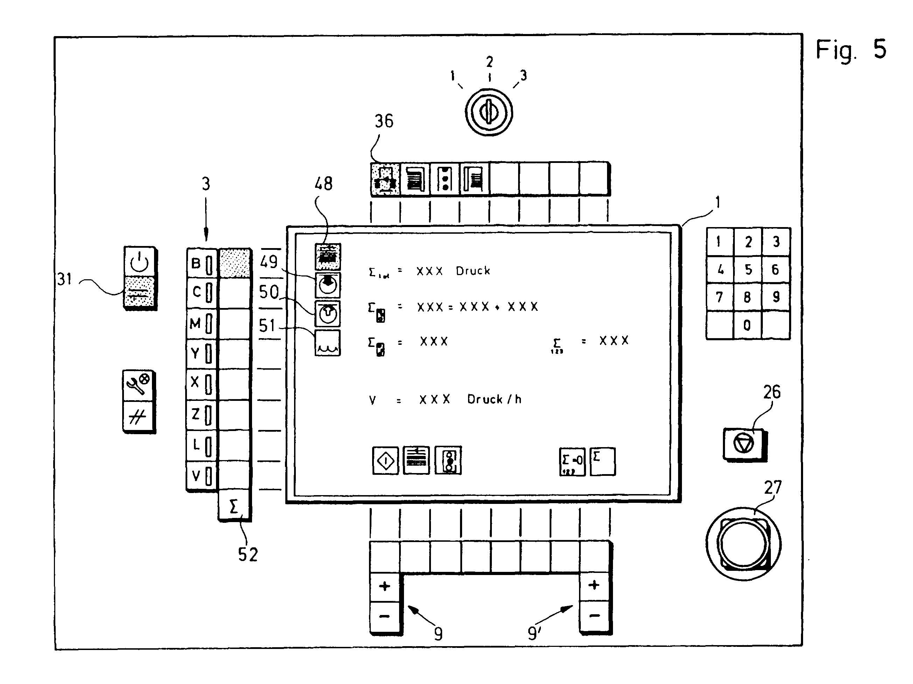

Fig. 5 zeigt ein Beispiel zur Anzeige des Papierlaufs in einer Bogendruckmaschine. Hier wird durch Auswahl der Taste 36 Maschine gesamt eine Zuordnung der Bedienelemente 3 durch die im Display 1 gezeigten Symbole Papierlauf 48, Saugluft 49, Blasluft 50, Kühlung 51, vorgenommen. Durch Betätigen der Taste Istwert 31 und nachfolgend der Taste 52, die dem Papierlauf 48 zugeordnet ist, werden auf dem Display 1 die für den Papierlauf erforderlichen Daten in alphanumerischer Darstellung angezeigt. So zeigt die Anzeige Summe total (Σₜₒₜ), die gesamten von der Druckmaschine erstellten Drucke, die Anzeige Summe Druckwerk (Σ), die zu erstellenden Drucke pro Auflage, die Anzeige (V), die Geschwindigkeit der Maschine in Druck pro Stunde sowie Anzeige Summe (Σ_{1,2,3}) die Tagesleistung in Anzahl Drucke. Über die Bedienelemente 4, deren Zuordnung im Display 1 durch die über den Bedienelementen befindlichen graphischen Symbole festgelegt ist, können die bestimmten Funktionsglieder ein- bzw. ausgeschaltet werden, außerdem kann über die Taste 9' der Auflagenzähler gesetzt werden und über die Taste 9 die Geschwindigkeit der Maschine voreingestellt werden.

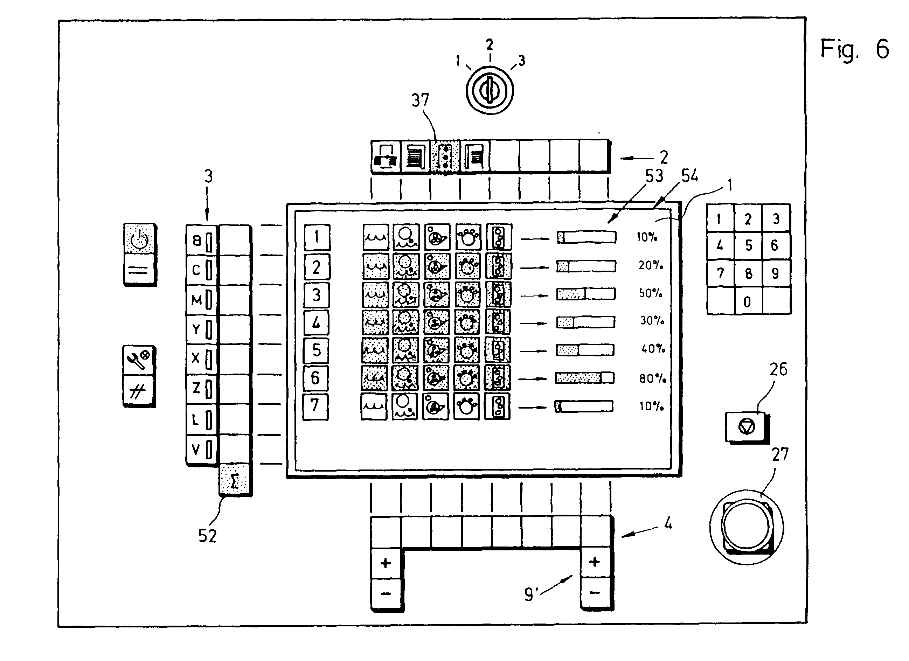

In Fig. 6 ist in einem Beispiel die Anzeige aller Druckwerke einer Bogendruckmaschine dargestellt. Durch Betätigen der Taste 37 der Bedienelemente 2 werden die Bedienelemente 3 durch Anzeige der Ziffern 1-7 im Display 1, den Druckwerken 1-7 zugeordnet. Nunmehr kann die Vorwahltaste 30 oder die Istwerttaste 31 betätigt werden. Zur Anzeige sämtlicher Druckwerke wird nachfolgend eine Summentaste 52 betätigt, daraufhin erscheinen in dem Display 1 sämtliche Funktionsglieder der einzelnen Druckwerke, wobei durch Aufleuchten der Funktionsglieder der Druckwerke 2-6 angezeigt wird, daß diese eingeschaltet sind. Durch Betätigen einer der Funktionstasten der Bedienelemente 4 werden bei dieser Summenanzeige sämtliche dieser Funktionstasten zugeordneten Funktionsglieder geschaltet. Über die Taste 9', besteht die Möglichkeit, die Drehzahleinstellungen der Feuchtung, d.h. der Tauchwalzen die graphisch und alphanumerisch dargestellt sind (53,54), zu verändern. Auch hier erfolgt die Veränderung für alle Druckwerke gleichzeitig und gleichmäßig.

Selbstverständlich besteht auch die Möglichkeit ein einzelnes Druckwerk, innerhalb der Summendarstellung einzustellen bzw. zu bedienen. Hierzu wird die dem entsprechenden Druckwerk zugeordnete Taste der Bedienelemente 3 betätigt. Daraufhin wird nur dieses entsprechende Druckwerk bzw. die Funktionsglieder dieses Druckwerks angezeigt und eine Einstellung ist dann nur für dieses Druckwerk vornehmbar. Dieses Druckwerk kann auch einzeln dargestellt werden. Diese Möglichkeit der Darstellung eines einzigen Druckwerks aus einer Summendarstellung heraus kann als Feinanzeige bezeichnet werden und ermöglicht nachdem eine erste Grobinformation über sämtliche Druckwerke gewonnen wurde eine genaue Information bezüglich eines bestimmten ausgewählten Druckwerks.

Zusätzlich zu einem solchen Steuerpult, der zentral eine Steuerung einer Druckmaschine ermöglicht, besteht auch die Möglichkeit, an bestimmten Orten der Druckmaschine dezentrale Steuereinrichtungen bzw. Anzeigeeinrichtungen vorzusehen. Ein solcher Ort ist beispielsweise der Anleger oder auch der Ausleger. Dort befinden sich jeweils Anzeigen, die die Geschwindigkeit der Druckmaschine, den korrekten Bogenlauf und ähnliches anzeigen, außerdem sind dort Bedienelemente angeordnet, die einen Maschinenhalt, einen Not-Aus, einen Druckanlauf, eine Geschwindigkeitsregelung, ein Ein- und Ausschalten des Papierlaufs ermöglichen. Weiter sind verschiedene Meldeeinrichtungen vorgesehen um Störungen aufzuzeigen. Außerdem ist es zweckmäßig, an jedem Druckwerk eine Bedienstelle einzurichten, mit welcher das Einspannen einer Druckplatte gesteuert werden kann oder auch die Maschine mit kurzen Impulsen vorwärts oder rückwärts oder im Schleichgang ansteuerbar ist.

Wird an einer der dezentralen Bedienstellen ein Funktionsglied geschaltet, so wirkt selbstverständlich diese Umschaltung auch auf den zentralen Steuerpult, so daß am Steuerpult immer der aktuelle Zustand der Maschine angezeigt wird.

### TEILELISTE

- 1: Display
- 2: Bedienelemente
- 3: Bedienelemente
- 4: Bedienelemente
- 5: Maschine gesamt
- 6: Hauptgruppe
- 7: Hauptgruppe
- 8: Hauptgruppe
- 9/9': Taste +/-
- 10: Taste
- 11: Taste
- 12: Taste
- 13: Taste
- 14: Taste
- 15: Schemadarstellung
- 16: Funktionsglied
- 17: Funktionsglied
- 18: Funktionsglied
- 19: Funktionsglied
- 20: Funktionstaste
- 21: Funktionstaste
- 22: Funktionstaste
- 23: Funktionstaste
- 24: Wertezeiger
- 25: Eingabefeld
- 26: Taste Maschinenhalt
- 27: Taste Not-Aus
- 28: Tastengruppe
- 29: Tastengruppe
- 30: Vorwahltaste
- 31: Istwerttaste
- 34: Servicetaste
- 35: Störungstaste
- 36: Maschine gesamt
- 37: Ausleger
- 38: Druckwerke
- 39: Anleger
- 40: Start
- 41: Saugwalze
- 42: Auslagelüfter
- 43: Pudergerät
- 44: IR-Trockner
- 45: Gebläse Auslegerkettenrad
- 46: Drehzahlanzeige
- 47: Drehzahlanzeige
- 48: Papierlauf
- 49: Saugluft
- 50: Blasluft
- 51: Kühlung
- 52: Σ-Taste
- 53: Drehzahl-Feuchtung
- 54: Drehzahl-Feuchtung
- 55: Schlüsselschalter
- 56: Anzeigemodustaste

## Patentansprüche

1. Steuerungseinrichtung einer Offsetdruckmaschine mit mehreren Druckwerken,
bestehend aus einem Steuerpult mit mehreren Gruppen von Bedienelementen zur Eingabe von Steuersignalen und einer Anzeigeeinrichtung für alphanumerische und grafische Informationen zum Steuerungszustand, welche von den Bedienelementen umgeben ist,
**dadurch gekennzeichnet,**
a) daß die Bedienelemente (5, 6, 7, 8) einer ersten Gruppe (2) von Bedienelementen eine vorgegebene Zuordnung zu wählbaren Hauptgruppen (A, B, C) aufweisen, wobei eine der Hauptgruppen (38) die Druckwerke in ihrer Gesamtheit repräsentiert und eine weitere Hauptgruppe (36) zu steuernde Komponenten (X, Y, Z) der Offsetdruckmaschine repräsentiert, welche örtlich über die gesamte Offsetdruckmaschine verteilt angeordnet sind,
b) daß die Bedienelemente (10, 11, 12, 13, 14) einer zweiten Gruppe (3) wählbaren zu steuernden Komponenten (X, Y, Z) der durch die Betätigung der Bedienelemente (5, 6, 7, 8) der ersten Gruppe (2) wählbaren Hauptgruppe (A, B, C) zugeordnet sind,
c) daß die Bedienelemente (20, 21, 22, 23) einer dritten Gruppe (4) zur Eingabe von Schalt- oder Einstellbefehlen an Funktionsglieder (16, 17, 18, 19) ausgebildet sind, um eine entsprechende Funktion in dem durch die Bedienelemente (10, 11, 12, 13, 14) der zweiten Gruppe (3) gewählten Komponenten (X, Y, Z) auszulösen,
d) daß auf der Anzeigevorrichtung (1) die Zuordnung der ausgewählten Hauptgruppe (A, B, C) der Komponenten (X, Y, Z) und der Funktionglieder (16, 17, 18, 19) in entsprechenden grafischen Symbolen anzeigbar ist, wobei mindestens ein Anzeigebereich (24, 47, 53) für den Betrag eines Einstellwertes vorgesehen ist, und wobei die Gruppen (2, 3, 4) von Bedienelementen an den Außenseiten der rechteckförmigen Anzeigeeinrichtung (1) derart angeordnet ist, daß auf ihr die direkte Zuordnung der Bedienelemente zu den Komponenten (X, Y, Z) und Funktionsgliedern (16, 17, 18, 19) durch eine zeilen- und/oder spaltenförmige Zuordnung von auf der Anzeigeeinrichtung (1) darstellbaren grafischen Symbolen zu den Bedienelementen sichtbar ist.

2. Einrichtung nach Anspruch 1,
**dadurch gekennzeichnet,**
daß mit weiteren Bedienelementen (56) der Eingabemodus bestimmt wird, derart, daß ein eingegebener Schaltbefehl und/oder ein Einstellbefehl unmittelbar oder nur in einem bestimmten Betriebszustand der Druckmaschine das Schalten oder Einstellen der bestimmten Funktionen bewirkt.

3. Einrichtung nach Anspruch 1 oder 2,
**dadurch gekennzeichnet,**
daß mittels der Anzeigeeinrichtung (1) die Druckmaschine gesamt oder Komponenten der Druckmaschine graphisch dargestellt werden.

4. Einrichtung nach Anspruch 3,
**dadurch gekennzeichnet,**
daß die Anzeige der Druckmaschine gesamt oder deren Komponenten durch die Bedienelemente derart ausgebildet wird, daß je nach Art der vorzunehmenden Bedienung die entsprechende Anzeige erfolgt.

5. Einrichtung nach einem oder mehreren der vorhergehenden Ansprüche,
**dadurch gekennzeichnet,**
daß eine Bedienung der Maschine auch bei Ausfall der Anzeigeeinrichtung aufgrund der vorwählbaren und fest definierten Zuordnung der Bedienelemente möglich ist.

6. Einrichtung nach einem oder mehreren der vorhergehenden Ansprüche,
**dadurch gekennzeichnet,**
daß zusätzlich zu den Bedienelementen zusätzliche Bedienelemente vorgesehen sind, mit welchen autonom ablaufende Prozesse in der Druckmaschine ausgelöst werden.

7. Einrichtung nach einem oder mehreren der vorhergehenden Ansprüche,
**dadurch gekennzeichnet,**
daß wenigstens ein Bedienelement (52) vorgesehen ist, mit welchem die Darstellung mehrerer Komponenten gleichzeitig vorgenommen wird.

8. Einrichtung nach einem oder mehreren der vorhergehenden Ansprüche,
**dadurch gekennzeichnet,**
daß wenigstens ein Bedienelement vorgesehen ist, mit welchem ein Schalt- und/oder Einstellbefehl auf mehrere Komponenten gleichzeitig wirksam wird.

9. Einrichtung nach Anspruch 1,
**dadurch gekennzeichnet,**
daß die Zuordnung der Bedienelemente derart gewählt ist, daß die nacheinander auszuführende Betätigung der Bedienelemente näherungsweise bogenförmig in einer bestimmten Richtung um das Display (1) erfolgt.

10. Einrichtung nach einem oder mehreren der vorhergehenden Ansprüche,
**dadurch gekennzeichnet,**
daß wenigstens ein Bedienelement (34) zur Initiierung einer überprüfung der Schaltzustände der Komponenten vorgesehen ist,und daß nach der Initiierung diese Schaltzustände und/oder deren Xnderungen auf der Anzeigeeinrichtung (1) angezeigt werden.

11. Einrichtung nach einem oder mehreren der vorhergehenden Ansprüche, die als zentral angeordnete Einrichtung der Druckmaschine derart ausgebildet ist,
daß an einzelnen Komponenten der Druckmaschinen, wie Papierzufuhr, Papierablage, Druckwerk usw., jeweils wenigstens eine dezentrale Bedien- und Anzeigeeinrichtung vorgesehen ist.

12. Einrichtung nach Anspruch 12, die als zentral angeordnete Einrichtung der Druckmaschine derart ausgebildet ist,
daß eine Steuerung bestimmter Komponenten, welche mittels der dezentralen Bedieneinrichtung vorgenommen wird, auf die zentral angeordnete Einrichtung wirkt.

13. Einrichtung nach einem oder mehreren der vorhergehenden Ansprüche, die als zentral angeordnete Einrichtung der Druckmaschine derart ausgebildet ist,
daß Eingaben an einem Farb- und/oder Registersteuerpult auf die zentral angeordnete Einrichtung, oder Eingaben an der zentral angeordneten Einrichtung auf den Farb-und/oder Registersteuerpult wirken.

## Claims

1. Device for controlling an offset printing machine having multiple printing units, the control device consisting of a control desk with multiple groups of control elements for the input of control signals, and a display for indicating alphanumeric and graphic information as to the state of operation, the display being surrounded b y the control elements,
**characterized**
a) in that the control elements (5, 6, 7, 8) of a first group (2) of control elements have a fixed correlation with selectable main groups (A, B, C), one of the main groups (key 38) representing all the printing units and a further main group (key 36) representing components (X, Y, Z) to be controlled in the offset printing machine, these components being in different locations throughout the offset printing machine;
b) that the control elements (10, 11, 12, 13, 14) of a second group (3) are assigned to selectable components (X, Y Z) of the main group (A, B, C) to be selected by the actuation of the control elements (5, 6, 7, 8) of the first group (2);
c) that the control elements (20, 21, 22, 23) of a third group (4) are designed to enable the input of switching or setting commands to be transmitted to function elements (16, 17, 18, 19), in order to trigger a specific function in the components (X, Y, Z) selected by the control elements (10, 11, 12, 13, 14) of the second group (3);
d) that on the display device (1) there can be indicated by means of respective graphic symbols the correlation of the selected main group (A, B, C), the components (X, Y, Z), and the function elements (16, 17, 18, 19), respectively, whereby at least one display panel (24, 47; 53) is provided for indicating the amount of a setting value, and whereby the groups (2, 3, 4) of control elements are arranged at the outer sides of the rectangular display device (1) in such a manner, that the direct assignment of the control elements to the components (X, Y, Z) and the function elements (16, 17, 18, 19) is visible on the display device (1) in the form of graphic symbols which are assigned linewise or columnwise to the control elements.

2. Device according to Claim 1,
**characterized**
in that the input mode is determined with further control elements (56) such, that an input switching and/or setting command effects the switching or setting of the particular functions immediately or in a particular state of operation of the printing machine.

3. Device according to Claim 1 or 2,
**characterized**
in that by means of the display device (1) the entire printing machine or components thereof can be graphically illustrated.

4. Device according to Claim 3,
**characterized**
in that the display of the printing machine, entirely or its components, through the control elements is designed such, that each kind of control to be executed is indicated by a respective display.

5. Device according to one or several of the preceding claims,
**characterized**
in that control of the machine is also possible in the event of failure of the display device, due to the preselectable and fixed correlation of the control elements.

6. Device according to one or several of the preceding claims,
**characterized**
in that control elements in addition to said control elements are provided with which autonomous processes in the printing machine are triggered.

7. Device according to one or several of the preceding claims,
**characterized**
in that at least one control element (52) is provided through which several components are displayed simultaneously.

8. Device according to one or several of the preceding claims,
**characterized**
in that at least one control element is provided through which a switching or setting command becomes effective simultaneously in several components.

9. Device according to Claim 1,
**characterized**
in that the correlation of the control elements is selected in a manner that the operations of the control elements to be executed consecutively take place by way of an arch-like approach in a certain direction around the display device (1).

10. Device according to one or several of the preceding claims,
**characterized**
in that at least one control element (34) is provided for initiating an inspection of the switching states of the components, and that after such initiation these switching states and/or the changes thereof are indicated on the display device (1).

11. Device according to one or several of the preceding claims which, as a centrally arranged facility of the printing machine, is designed such that at individual components of the printing machine, like paper feed, paper delivery, printing unit etc., there is provided at least one decentralized control and display device.

12. Device according to Claim 11 which, as a centrally arranged facility of the printing machine, is designed such that a control of certain components, which takes place by means of the decentralized control device, acts on the centrally arranged device.

13. Device according to one or several of the preceding claims which, as a centrally arranged facility of the printing machine, is designed such that inputs on an ink and/or register control desk act on the centrally arranged device, or that inputs on the centrally arranged device act on the ink and/or register control desk.

## Revendications

1. Dispositif de commande d'une machine à imprimer offset comprenant plusieurs mécanismes d'impression,
se composant d'un pupitre de commande comportant plusieurs groupes d'éléments de manoeuvre pour l'entrée de signaux de commande, ainsi qu'un dispositif d'affichage d'informations alphanumériques et graphiques concernant l'état de la commande, ce dispositif d'affichage étant entouré des éléments de manoeuvre,
caractérisé
a) en ce que les éléments de manoeuvre (5, 6, 7, 8) d'un premier groupe (2) d'éléments de manoeuvre ont une affectation prescrite à des groupes principaux pouvant être sélectionnés (A, B, C), l'un des groupes principaux (38) représentant les mécanismes d'impression dans leur ensemble et un autre groupe principal (36) représentant des composants (X, Y, Z) de la machine à imprimer offset qui doivent être commandés et qui sont disposés localement en étant répartis sur la totalité de la machine à imprimer offset,
b) en ce que les éléments de manoeuvre (10, 11, 12, 13, 14) d'un deuxième groupe (3) de composants à commander, pouvant être sélectionnés (X, Y, Z), sont associés au groupe principal (A, B, C) pouvant être sélectionné par l'actionnement des éléments de manoeuvre (5, 6, 7, 8) du premier groupe (2),
c) en ce que les éléments de manoeuvre (20, 21, 22, 23) d'un troisième groupe (4) sont réalisés pour l'entrée d'instructions de mise en service ou de réglage d'organes fonctionnels (16, 17, 18, 19) afin de déclencher un fonctionnement correspondant des composants (X, Y, Z) sélectionnés par les éléments de manoeuvre (10, 11, 12, 13, 14) du deuxième groupe (3),
d) en ce que l'affectation des groupes principaux sélectionnés (A, B, C) des composants (X, Y, Z) et des organes fonctionnels (16, 17, 18, 19) peut être affichée en symboles graphiques correspondants sur le dispositif d'affichage (1).
au moins une zone d'affichage (24, 47, 53) de la valeur d'une grandeur d'affichage étant prévue,
et les groupes (2, 3, 4) d'éléments de manoeuvre sont disposés sur les côtés extérieurs du dispositif rectangulaire d'affichage (1) de manière que soit visible sur eux l'affectation directe des éléments de manoeuvre aux composants (X, Y, Z) et
des organes fonctionnels (16, 17, 18, 19) aux éléments de manoeuvre par une association en forme de lignes et/ou de colonnes de symboles graphiques pouvant être représentés sur le dispositif d'affichage (1).

2. Dispositif selon la revendication 1.
caractérisé
en ce que le mode d'entrée est déterminé par d'autres éléments de manoeuvre (56) de manière qu'une instruction entrée de mise en service et/ou une instruction de réglage provoque directement ou uniquement à un état de service déterminé de la machine à imprimer la mise en service ou le réglage des fonctions déterminées.

3. Dispositif selon la revendication 1 ou 2,
caractérisé
en ce que la machine à imprimer est représentée globalement ou les composants de la machine à imprimer sont représentés graphiquement au moyen du dispositif d'affichage (1).

4. Dispositif selon la revendication 3,
caractérisé
en ce que l'affichage de la machine à imprimer dans son ensemble ou de ses composants au moyen des éléments de manoeuvre est conçu de manière que l'affichage correspondant ait lieu selon le type de la manipulation à laquelle il faut procéder.

5. Dispositif selon l'une ou plusieurs des revendications précédentes,
caractérisé
en ce qu'une manipulation de la machine est aussi possible en cas de défaillance du dispositif d'affichage en raison de l'affectation présélectionnable et fixement définie des éléments de manoeuvre.

6. Dispositif selon l'une ou plusieurs des revendications précédentes,
caractérisé
en ce que des éléments auxiliaires de manoeuvre. à l'aide desquels des processus se déroulant de manière autonome dans la machine à imprimer sont déclenchés, sont prévus en plus des éléments de manoeuvre.

7. Dispositif selon l'une ou plusieurs des revendications précédentes,
caractérisé
en ce qu'au moins un élément de manoeuvre (52), à l'aide duquel il est procédé simultanément à la représentation de plusieurs composants, est prévu.

8. Dispositif selon l'une ou plusieurs des revendications précédentes,
caractérisé
en ce qu'au moins un élément de manoeuvre, à l'aide duquel une instruction de mise en service et/ou de réglage agit simultanément sur plusieurs composants, est prévu.

9. Dispositif selon la revendication 1,
caractérisé
en ce que l'affectation des éléments de manoeuvre est adoptée de manière que l'actionnement des éléments de manoeuvre devant être effectué successivement ait lieu approximativement en arc de cercle dans un sens déterminé autour de l'affichage (1).

10. Dispositif selon l'une ou plusieurs des revendications précédentes,
caractérisé
en ce qu'au moins un élément de manoeuvre est prévu pour l'initialisation d'un contrôle des états de mise en service des composants et en ce qu'à la suite de l'initialisation, ces états de mise en service et/ou leurs modifications sont affichés sur le dispositif d'affichage (1).

11. Dispositif selon l'une ou plusieurs des revendications précédentes, qui est conformé en dispositif de la machine à imprimer qui est disposé centralement de manière
qu'au moins un dispositif décentralisé de manoeuvre et d'affichage soit prévu sur des composants individuels de la machine à imprimer tels que l'amenée de papier, le dépôt de papier, un mécanisme d'impression, etc.

12. Dispositif selon la revendication 11, qui est réalisé sous forme d'un dispositif de la machine à imprimer disposé centralement de manière
qu'une commande de composants déterminés, à laquelle il est procédé au moyen du dispositif décentralisé de manoeuvre, agisse sur le dispositif disposé centralement.

13. Dispositif selon l'une ou plusieurs des revendications précédentes, qui est conformé en dispositif de la machine à imprimer qui est disposé centralement, de manière
que les entrées dans un pupitre de commande de l'encrage et/ou du repérage agissent sur le dispositif disposé centralement ou que les entrées dans le dispositif disposé centralement agissent sur le pupitre de commande de l'encrage et/ou du repérage.
